## Europäisches Patentamt
## European Patent Office
## Office européen des brevets

(11) Veröffentlichungsnummer: **0 157 309**
**B1**

(12) **EUROPÄISCHE PATENTSCHRIFT**

(45) Veröffentlichungstag der Patentschrift: **29.08.90**

(51) Int. Cl.⁵: **B 60 T 8/94**

(21) Anmeldenummer: **85103381.1**

(22) Anmeldetag: **22.03.85**

(54) Überwachungsverfahren für ein Bremssystem.

(30) Priorität: **02.04.84 DE 3412233**

(43) Veröffentlichungstag der Anmeldung:
**09.10.85 Patentblatt 85/41**

(45) Bekanntmachung des Hinweises auf die
Patenterteilung:
**29.08.90 Patentblatt 90/35**

(84) Benannte Vertragsstaaten:
**DE FR GB SE**

(56) Entgegenhaltungen:
**DE-A-2 546 481**
**DE-A-3 227 265**
**DE-A-3 237 959**
**DE-B-2 701 159**
**DE-B-2 723 847**
**FR-A-2 521 508**
**FR-A-2 532 259**

(73) Patentinhaber: **ROBERT BOSCH GMBH**
**Postfach 50**
**D-7000 Stuttgart 1 (DE)**

(72) Erfinder: **Gerstenmeier, Jürgen, Dipl.-Ing.**
**Veilchenweg 6**
**D-7129 Ilsfeld (DE)**
Erfinder: **Leiber, Heinz, Ing.-grad.**
**Theodor-Heuss-Strasse 34**
**D-7141 Oberriexingen (DE)**

(74) Vertreter: **Kammer, Arno, Dipl.-Ing.**
**ROBERT BOSCH GmbH Zentralabteilung**
**Patente Postfach 50**
**D-7000 Stuttgart 1 (DE)**

Courier Press, Leamington Spa, England.

## Beschreibung

Die Erfindung betrifft ein Überwachungsverfahren für ein Bremssystem enthaltend mit den Merkmalen des Oberbegriffs des Anspruchs 1.

Ein Bremssystem der geschilderten Auslegung ist aus der DE-A-3124 755 bekannt. Eine Fehlererkennung bei einem derartigen System ist in der DE-A-2723 847 beschrieben.

Der Erfindung liegt die Aufgabe zugrunde ein Überwachungssystem für ein derartiges Bremssystem zu schaffen, das auftretende Fehler besser erkennt und dann das elektronische Bremssystem abschaltet und auf den Betrieb umschaltet, bei dem der im Hauptbremszylinder erzeugte Druck direkt auf den oder die Radbremszylinder einwirkt, oder eine Warnung hervorruft.

Diese Lösung dieser Aufgabe wird durch die im Anspruch 1 angegebenen Merkmale erzielt.

Weitere Verbesserungen ergeben sich durch die in den Unteransprüchen angegebenen Weiterbildungen mit dem Ziel ein fehlersicheres System zu erhalten.

Anhand der Zeichnung werden Ausführungsbeispiele einmal des Bremssystems, bei dem das erfindungsgemäße Verfahren angewandt werden kann, und zum andern von Schaltungen zur Durchführung des erfindungsgemäßen Überwachungsverfahrens näher erläutert.

Es zeigen:

Fig. 1 ein erstes Beispiel eines elektronische Bremssystems,

Fig. 2 ein weiteres Beispiel hierzu,

Fig. 3 der prinzipielle Aufbau des Reglers des Beispiels der Fig. 2,

Fig. 4 der prinzipielle Aufbau der Schaltung zur Durchführung des Überwachungsverfahrens,

Fig. 5 eine erste Detailschaltung mit Auswertung der Druckwerte zur Fehlererkennung,

Fig. 6 eine weitere Datailschaltung zur Auswertung der Druckwerte zur Fehlererkennung,

Fig. 7 eine Detailschaltung mit Überwachung der Magnetventilansteuerung und des Bremslichtschalters,

Fig. 8 eine Detailschaltung zur Überwachung des Druckwarnschalters und der Flüssigkeitsstandanzeige,

Fig. 9 eine Detailschaltung zur Überwachung des Pumpenmotorbetriebs,

Fig. 10 eine Detaildarstellung des Aufbaus einer Abschaltlogik der Fig. 4.

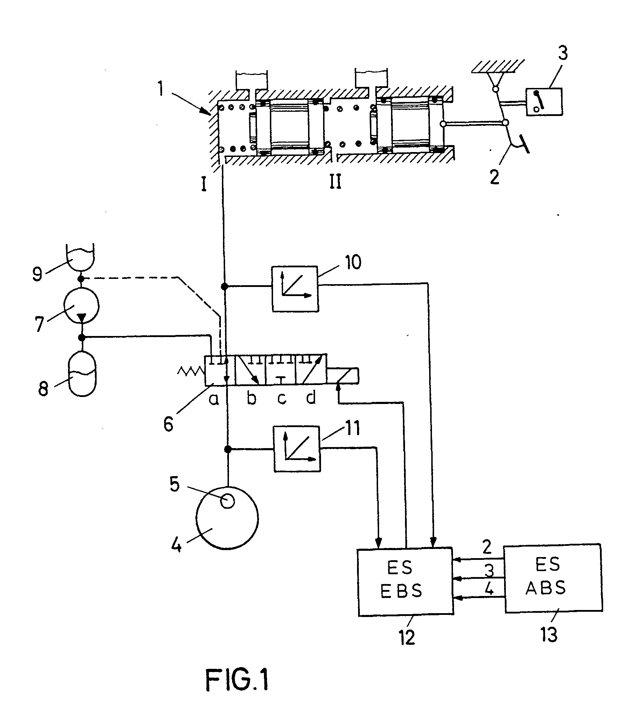

In Fig. 1 ist ein Bremssystem dargestellt, bei dem das erfindungsgemäße Verfahren bzw. die dafür benötigten Schaltungen zum Einsatz kommen können. Mit 1 ist eine Tandemhauptbremszylinderanordnung bezeichnet, deren Kolben über ein Pedal 2 betätigt werden. Ein diesem zugeordneter Bremslichtschalter trägt das Bezugszeichen 3. Ein dem Bremskreis I zugeordneter Radbremszylinder eines Rads 4 ist mit 5 bezeichnet. Zwischen Hauptbremszylinderanordnung 1 und Radbremszylinder 5 ist ein Vierstellungsmagnetventil 6 angeordnet, das auch mit einer aus Pumpe 7, Speicher 8 und Reservoir 9 bestehenden Druckquelle verbunden ist. Vor und hinter dem Vierstellungsventil 6 sind Meßwertgeber 10 und 11 vorgesehen, die ein dem vom Hauptbremszylinder 1 eingesteuerten bzw. am Radbremszylinder 5 herrschenden Druck entsprechendes Signal zu einer Steuerelektronik 12 liefern. An diese Steuerelektronik ist eine ABS-Elektronik 13 angeschaltet, die bei Blockierneigung Steuersignale für das Vierstellungsventil 6 erzeugt und der Steuerelektronik zuführt.

In der Stellung a verbindet das Vierstellungsventil 6 den Hauptbremszylinder 1 und den Radbremszylinder 5, in Stellung b wird der Radbremszylinder 5 an die Druckquelle 7-9 angeschaltet, in Stellung c wird der Radbremszylinderdruck konstantgehalten und in Stellung d wird der Druck am Radbremszylinder 5 abgebaut.

Bei Betätigen der Bremse wird das Vierstellungsventil 6 zuerst in die Stellung b und danach in die Stellungen c und evtl. d so gesteuert, daß sich am Radbremszylinder 5 ein gegenüber dem vom Hauptbremszylinder eingesteuerten und vom Druckmeßwertgeber 10 gemessenen Druck um einen vorgegebenen Faktor > 1 verstärkter und vom Druckmeßwertgeber 11 gemessener Druck einstellt. Das Vierstellungsventil stellt hier also zusammen mit der Druckquelle 7-9, den Druckmeßwertgebern 10 und 11 und der Steuerelektronik 12 einen Druckverstärker dar, wobei der Verstärkungsfaktor in der Elektronik 12 vorgegeben ist. Im Falle einer Blockierneigung kann das Vierstellungsventil 6 aber auch zur Druckvariation entsprechend dem Radbewegungsverhalten verwendet werden. Bei einem Fehler im System wird das Vierstellungsventil in die Stellung a gebracht, sodaß direkt mit dem Hauptbremszylinderdruck gebremst werden kann.

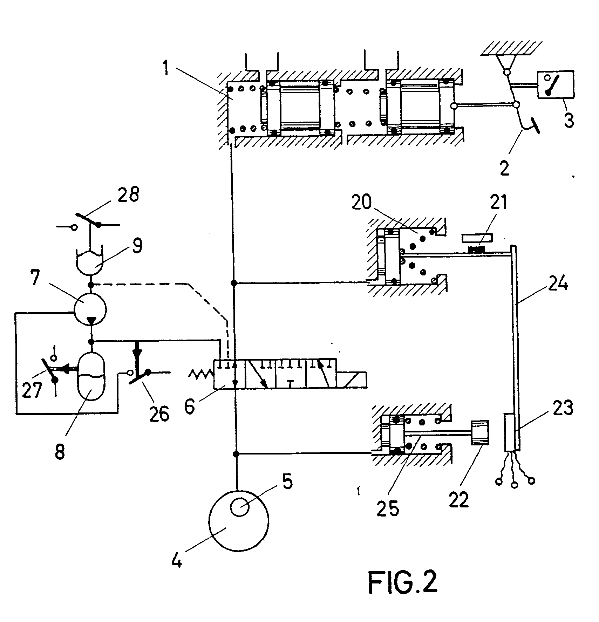

Bei der Ausführungsform der Fig. 2 sind gegenüber der Fig. 1 lediglich die Druckmeßwertgeber 10 und 11 durch einen Druckgeber 20/21 für den Hauptbremszylinderdruck und einen Differenzdruckgeber 22-25 ersetzt und es sind noch Schalter 26-28 dargestellt, die den Pumpenmotor in Abhängigkeit vom Druck im Speicher 8 ein- und ausschalten (Schalter 26) bzw. ein Signal abgeben, wenn der Speicherdruck unter einen bestimmten Wert sinkt (Schalter 27) bzw. ein Signal abgeben, wenn die Menge der Flüssigkeit im Reservoir 9 unter einen bestimmten Wert sinkt (28).

Der Druckgeber 20/21 für den Hauptbremszylinderdruck besteht aus einer Zylinder/Kolbenanordnung 20 mit Feder, wobei der Kolben entsprechend dem Hauptbremszylinderdruck ausgelenkt wird. Diese Verschiebung wird durch den Fühler 21 z.B. ein Hallsensor in ein vom Hauptbremszylinderdruck $P_{HZ}$ abhängiges Signal umgewandelt.

Der Differenzdruckgeber zwischen Hauptbremszylinderdruck und Radbremszylinderdruck besteht wieder aus einer Zylinder/Kolbenanordnung 25 mit Feder, dessen Kolben entsprechend dem Radbremszylinderdruck ausgelenkt wird. Der eigentliche Differenzdrucksensor besteht aus den Teilen 22 und 23, z.B. wieder ein Hallsensor; das Teil 23 gibt ein dem Abstand der Teile 22 und 23 entsprechendes Signal ab. Da die beiden Teile 22/ 23 mit den auslenkbaren Kolben der Zylinder/Kolbenanordnung 20 bzw. 25 verbunden ist, ist der Abstand zwischen den Teilen und damit auch das Signal des Teils 23 abhängig vom Differenzdruck.

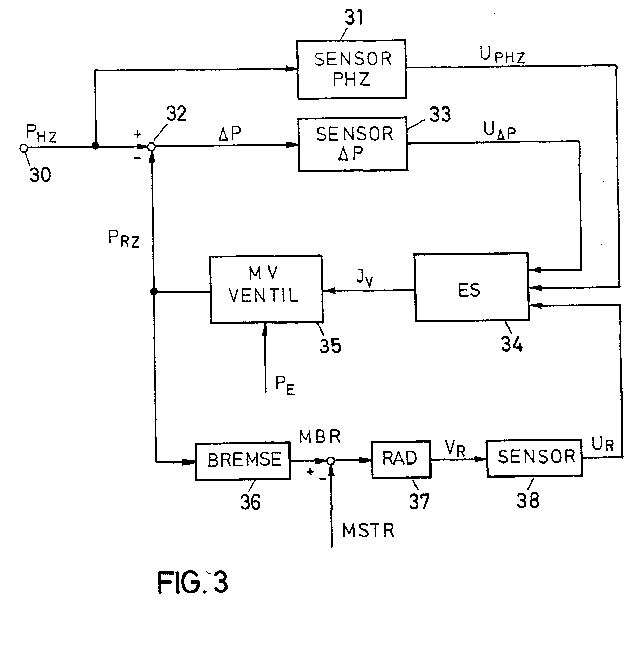

Fig. 3 zeigt prinzipiell den Regelkreis für die Ausführungsform der Fig. 2. Bei 30 wird der Hauptbremszylinderdruck $P_{HZ}$ zugeführt, der in einem Geber 31 in ein Drucksignal $U_{PHZ}$ umgewandelt wird. In einem Vergleicher 32 wird die Druckdifferenz $\triangle P$ zwischen dem Radzylinderdruck $P_{RZ}$ und dem Druck $P_{HZ}$ im Hauptbremszylinder gebildet, die im Geber 33 in ein entsprechendes Drucksignal $U_{\triangle P}$ umgewandelt wird. Beide Drucksignale werden der Gesamtelektronik 34 zugeführt, die durch einen entsprechenden Strom $J_V$ ein Bremsdrucksteuerventil 35 steuert, dem der Druck $P_E$ des Druckgebers 7-9 zugeführt wird und das den Druck im Radbremszylinder 36 bestimmt. Dem Bremsmoment $M_{BR}$ der Radbremse 36 wirkt das Moment der Straße $M_{STR}$ entgegen.

Die Differenz dieser Momente wirkt auf das Rad 37, dessen Geschwindigkeit $v_R$ durch den Geschwindigkeitssensor 38 ermittelt und als Signal $U_R$ der Gesamtelektronik gemeldet wird und bei Blockierneigung eine Regelung bekannter Art auslöst.

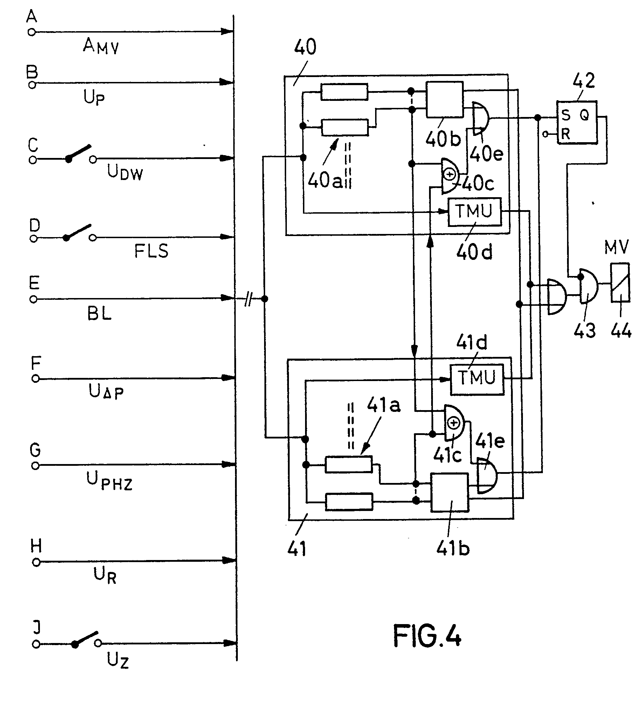

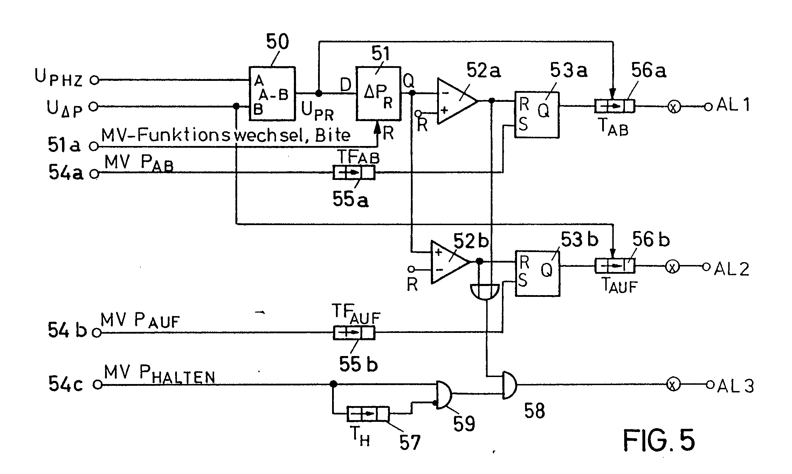

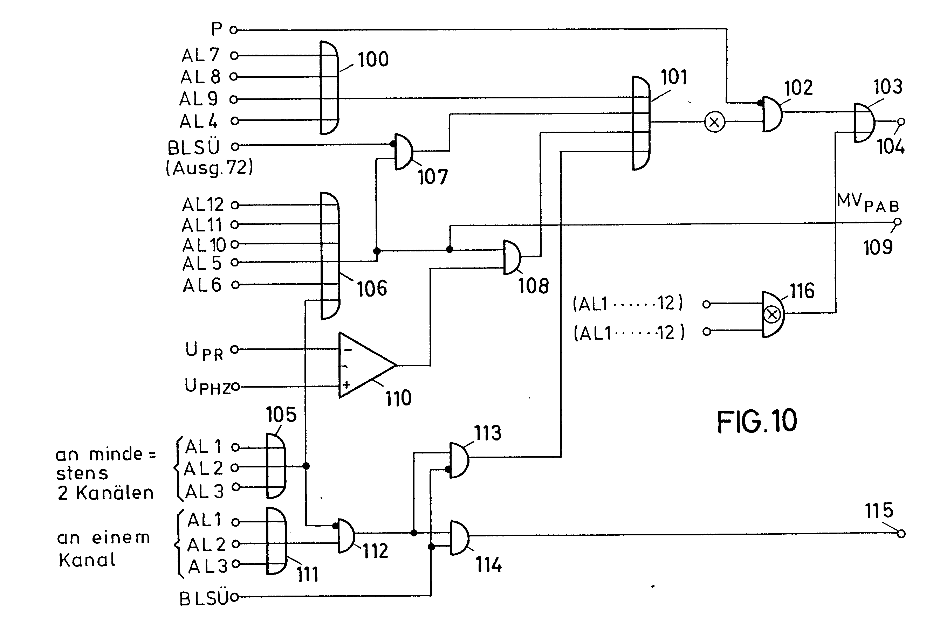

In Fig. 4 ist ein Ausführungsbeispiel einer Schaltung zur Durchführung des erfindungsgemäßen Verfahrens prinzipiell dargestellt. Auf der linken Seite werden neun verschiedene Signale zugeführt und zwar bei A das Ansteuersignal MV für das Magnetventil 6, bei B die Pumpenmotorspannung $U_P$, bei C das Druckwarnschaltersignal $U_{DW}$ bei D das Signal FLS des Schalters 28 der Fig. 2 bei Absinken des Flüssigkeitsstandes, bei E das Bremslichtschaltersignal BL, bei F das Differenzdruckgebersignal $U_{\triangle P}$, bei G das Signal $U_{PHZ}$ entsprechend dem Hauptbremszylinderdruck, bei H das Raddrehzahlsignal $U_R$ und bei J das Zündschaltersignal $U_Z$. Die mit diesen Signaleingängen verbundene Überwachungsschaltung besteht aus zwei redundanten Überwachungszweigen 40 und 41, die je mehrere Überwachungsteile 40a bzw. 41a (Fig. 5-9), je eine Abschaltlogik 40b und 41b in (Fig. 10), je ein Vergleichsglied 40c und 41c zum Vergleich der Systemantworten in beiden Überwachungszweigen bei Ansteuerung mit einem Testmuster und je einen Generator für dieses Testmuster (in 40d und 41d) aufweisen. Ein Signal aus den Oder-Gattern 40e und 41e setzt einen Fehlerspeicher 42, dessen Ausgangssignal dann über das Und-Gatter 43 eine Ansteuerung des Vierstellungsventils 44 verhindert. Das Vierstellungsmagnetventil wird über die die Schaltbefehle erzeugenden Testmusterschaltglieder 40d und 41d und auch von den Abschaltlogiken bei Auftreten bestimmter Fehler angesteuert.

Wird im Fahrbetrieb ein Fehler festgestellt, so wird die Abschaltlogik 40b und/oder 41b angesteuert, die entscheidet, welche Reaktionen im System einzuleiten sind. Jeder Fehler führt letztendlich zum Setzen des Fehlerspeichers 42. Das Vierstellungsmagnetventil 44 wird dann stromlos, geht in die passive Stellung und verbindet den Hauptbremszylinder mit dem Radbremszylinder: damit ist unverstärkter Bremsbetrieb wirksam.

Die Sicherheitsschaltung 40/41 ist redundant aufgebaut und wird in einem Testzyklus so aktiviert, daß möglichst alle ihre Pfade 40a bzw. 41a ansprechen. Die Systemantworten im Testzyklus werden exclusiv verglichen (in 40c und 41c). Der Testzyklus läuft wie folgt ab:

Start:
alle Räder im Stillstand
HZ-Druck = 0
Zündschloß "AUS"
Ablauf:
Simulation von Ansteuersignalen für Magnetventilfunktionen
+ Aufbau
+ Halten
+ Abbau
- Zuschalten von Hilfssteuersignalen in der Ansteuerschaltung
- Verkürzung von Zeitkonstanten der Überwachungszeitglieder

Wird eine Abweichung bei Vergleich zwischen den beiden Blöcken festgestellt, wird das System nicht freigegeben. Da die Zeiträume zwischen zwei Testzyklen sehr klein gegenüber der MTBF (Mean Time Between Failure) des Systems sind, kann man im vorliegenden Konzept von einer überwachten Redundanz im Bereich der Sicherheitsschaltung sprechen.

Anhand der Fig. 5-9 werden jetzt die einzelnen Überwachungsteile der Fig. 4 beschrieben.

In Fig. 5 wird in einem Subtrahierer 50 ein der Differenz $U_{PHZ}$-$U_{\triangle P}$ und damit dem Druck im Radbremszylinder entsprechendes Signal $U_{PRZ}$ erzeugt. Mit einer Umschaltung des Vierstellungsventils z.B. in eine der Stellungen b-d wird über Klemme 51a ein $\triangle PR$-Speicher 51 rückgesetzt und damit die folgende Änderung $\triangle P_R$ des dem augenblicklichen Radzylinderdruck $P_{RZ}$ entsprechenden Signals $U_{PRZ}$ gegenüber dem Wert zum Rücksetzzeitpunkt in dem Speicher 51 festgehalten. In Vergleichern 52a und 52b wird dieses Signal mit einem vorgegebenen Wert R mit unterschiedlichen Vorzeichen verglichen. Der Vergleicher 52a gibt ein Ausgangssignal und setzt ein bistabiles Glied 53a zurück, wenn der Radzylinderdruck um $\triangle P_R$ = R abgenommen hat. Andererseits gibt der Vergleicher 52b ein Signal ab, wenn der Radbremsdruck um $\triangle P_R$ = R zugenommen hat; auch dieses Signal setzt ein bistabiles Glied 53b zurück. Gesetzt werden diese bistabilen Glieder 53a und b durch ein auftretendes Druckabbau (53a)- bzw. Druckaufbausignal (53b) für das Vierstellungsventil, das an den Klemmen 54a bzw. b eingekoppelt wird. Halten diese Signale länger als die vorgegebene Zeitkonstante $TF_{AUF}$ bzw. $TF_{AB}$ von Zeitgliedern 55a bzw. 55b an, so geben die Zeitglieder das Setzsignal für die bistabilen Glieder 53a bzw. 53b ab. In Zeitglieder 56a bzw. 56b wird nun überprüft, ob aufgrund der Ventilansteuerung wenigstens über die Zeit $TF_{AB}$ bzw. $TF_{AUF}$ der Zeitglieder 55a bzw. 55b eine Bremsdruckänderung erfolgt. Die Werte R, $TF_{AB}$ und $T_{AB}$ der Glieder 52a, 55a und 56a bzw. R, $TF_{AUF}$ und $T_{AUF}$ der Glieder 52b, 55b und 56b sind so aufeinander abgestimmt, daß ohne Fehler die Änderung des Radbremsdrucks die bistabilen Glieder 53a bzw. b zurücksetzt, bevor die Zeitkonstanten $T_{AB}$ bzw. $T_{AUF}$ der Glieder 56a bzw. b abgelaufen sind. Damit entstehen nur Ausgangssignale AL1 bzw. AL2 der Zeitglieder 56a bzw. b, wenn bei einer Ventilansteuerung keine entsprechende Druckänderung zustande kommt. Diese Fehlersignale AL1 bzw. AL2 werden der Abschaltlogik zugeführt.

Da die Druckänderungsgeschwindigkeit des Radbremsdrucks $P_{RZ}$ von der Druckhöhe abhängig ist, werden die Zeitkonstanten $T_{AB}$ bzw. $T_{AUF}$ der Zeitglieder 56a und b vorzugsweise verändert. Die Zeitkonstante $T_{AB}$ wird dabei in Abhängigkeit vom Radbremsdruck geändert (bei hohem Druck Verkürzung der Zeitkonstante) während die Zeitkonstante $T_{AUF}$ in Abhängigkeit vom Differenzdruck $\triangle P$ geändert wird.

In Fig. 5 wird zusätzlich noch überwacht, ob bei dem Befehl "Druck halten" (Stellung c des Vierstellungsventils) eine entsprechende Reaktion erfolgt. Bei einer Ventilansteuerung in Stellung c wird ebenfalls der $\triangle P_R$ — Speicher 51 rückgesetzt. Erscheint nun danach ein Ausgangssignal eines der Vergleicher 52a oder b, bevor die Zeitkonstante $T_H$ eines vom Haltesignal an Klemme 54c gesetzten Zeitglieds 57 abgelaufen ist, so gibt ein Und-Gatter 58 ein Fehlersignal AL3 ab. Nach Ablauf der Zeitkonstanten $T_H$ wird das Und-Gatter 58 über ein Und-Gatter 59 gesperrt, sodaß kein Fehlersignal mehr übertragen werden kann. Zeitglied $T_H$ ist so abgestimmt, daß zulässige Driften nicht zu einem Fehlersignal führen.

Die anhand der Fig. 5 beschriebene Überprüfung kann während des Einsatzes des Bremssystems fortlaufend erfolgen aber auch zur Überprüfung z.B. vor Fahrtbeginn benutzt werden. Im letztgenannten Fall muß dem Ventil ein entsprechendes Befehlsmuster zugeführt werden (also z.B. nacheinander Druckaufbau-, Druckabbau- und Druckhaltesignal). Man wird hier durch entsprechende Signale überprüfen, ob Fehlersignale entstehen, und insbesondere vergleichen, ob solche Fehlersignale in beiden Überwachungszweigen gleichzeitig auftreten. Die gezeigten Symbole zeigen Vergleichsstellen.

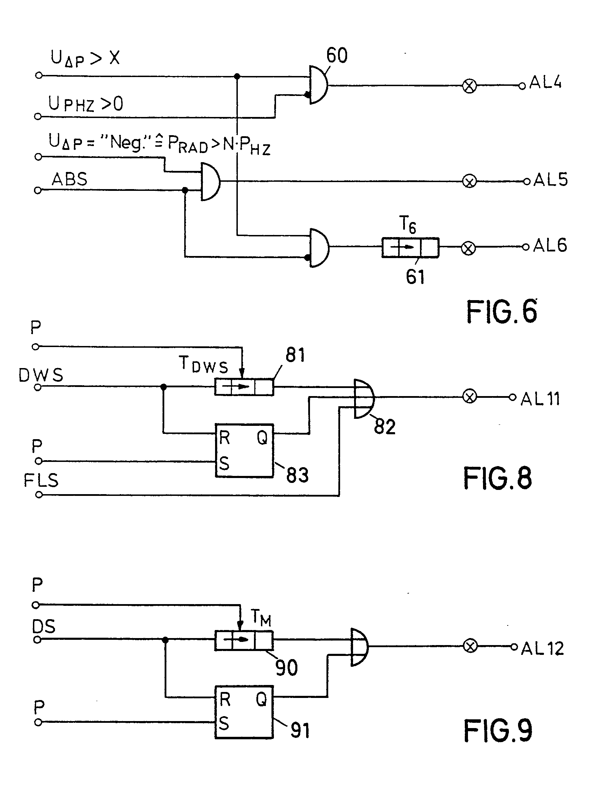

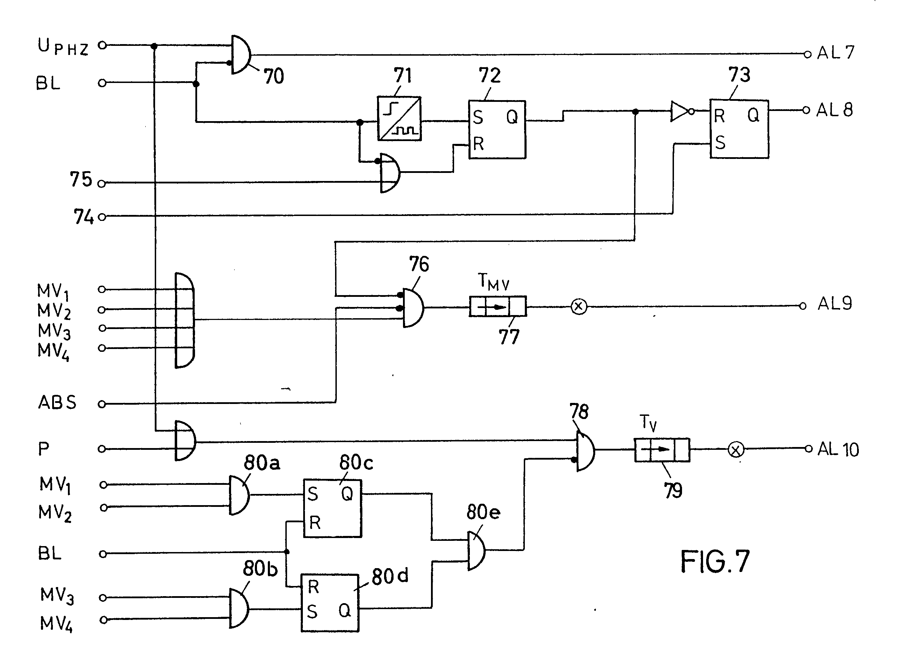

In Fig. 6 wird die Funktionsfähigkeit des Differenzdruckgebers mit Bremsung, ohne Bremsung und im ABS-Betrieb überwacht. Wird nicht gebremst und ist daher der Druck im Hauptbremszylinder 0, so steht an dem invertierten Eingang eines Und-Gatters 60 kein Signal an. In diesem Fall müßte ohne Fehler im System der Differenzdruck $\triangle P$ ebenfalls 0 sein. Ist dies nicht der Fall und ist deshalb $U_{\triangle P} > X$, wobei X der Wert des Differenzdruckgebers bei $\triangle P = 0$ ist, so steht am anderen Eingang des Und Gatters 60 ein Signal an, das durchgelassen wird und ein Fehlersignal AL4 erzeugt.

Im ABS-Fall kann der Radbremsdruck nicht höher als der um den gegebenen Verstärkungsfaktor N erhöhte Druck im Hauptbremszylinder sein. Wird also $U_{PRZ} > N . U_{PHZ}$ oder $U_{\triangle P}$ negativ und liegt gleichzeitig ABS-Signal an, so wird wieder ein Fehlersignal AL5 erzeugt.

Liegt kein ABS-Signal vor, und erreicht nach einer von der Zeitkonstanten $T_6$ eines Zeitglieds 61 bestimmten Zeit der Differenzdruck $\triangle P$ nicht den Wert 0 bzw. der Differenzdruckgeber nicht die neutrale Stellung ($U_{\triangle P} = X$) dann wird das Fehlersignal AL6 erzeugt. Dieses Signal deutet an, daß im normalen Bremsbetrieb kein rechtzeitiger Abgleich des Reglers erfolgt, sich also der Druck am Radbremszylinder nicht den Änderungen des Drucks des Hauptbremszylinders anpaßt.

Auch hier kann eine Überprüfung während des Betriebs und außerhalb des Fahrbetriebs in allen drei Zweigen erfolgen. Die Vergleichsstellen sind wieder mit (X) markiert.

In der Schaltung der Fig. 7 wird die Funktion des Bremslichtschalters und der Magnetventilansteuerung überwacht. Der Bremslichtschalter spielt eine wesentliche Rolle, weil über ihn erst die Ventilansteuerung ermöglicht wird.

In Fig. 7 wird ein Fehlersignal AL7 über ein Und-Gatter 70 erzeugt, wenn bei Betätigung des Hauptbremszylinders (z.B. $P_{HZ} > 0$) kein Bremslichtschaltersignal BL auftritt. Im nächsten Zweig wird ein fehlerhaftes Signal (BL-Signal) des Bremslichtschalters dynamisch erfaßt. Die positive Flanke eines BL-Signals setzt hierzu über einen pulserzeuger 71 einen Speicher 72, desen Ausgangssignal BLSÜ als BL-Signal gewertet wird. Dieser Prüfzweig ist nur bei Einsteuerung von Prüfsignalen überwachbar. Setzt ein solches Prüfsignal über Klemme 74 einen weiteren Speicher 73 und wird dieser nicht innerhalb einer vorgegebenen Zeit rückgesetzt, so gibt dieser ein Fehlersignal AL8 ab. Das Rücksetzsignal wird durch das Verschwinden des Ausgangssignals des Speichers 72 bewirkt, der seinerseits durch das Verschwinden des BL-Signals Oder eines Signals des Prüfzyklus auf Klemme 75 rückgesetzt wird.

Im das Fehlersignal AL9 erzeugenden Prüfkanal wird überprüft, ob bei Ansprechen des Vierstellungsventils oder wenigstens eines anderen Vierstellungsventils des Fahrzeugbremssystems (Signal $MV_{1-4}$) der Bremslichtschalter (BL-Signal bzw. Ausgangssignal aus 72) angesprochen hat. Ist dies nicht der Fall, so wird vom Und-Gatter 76 bei einem MV-Signal ein Signal abgegeben, das im Zeitglied 77 noch etwas verzögert wird, um ein verzögertes Ansprechen des Bremslichtschalters zu erfassen. Nach Ablauf der Zeitkonstanten $T_{MV}$ erscheint das Fehlersignal AL9, wenn dann kein BL-Signal vorliegt. Das Entstehen dieses AL9-Fehlersignals wird bei ABS-Betrieb unterdrückt (invertierter Eingang des Und-Gatters 76), weil es ohne Bremsdruckerzeugung (kein BL-Signal) z.B. bei Aquaplaning zu Ventilansteuerungen kommen kann und hierbei kein Fehlersignal erzeugt werden darf.

In dem das Fehlersignal AL10 erzeugenden Kanal wird überprüft, ob bei Bremsbetätigung ($P_{HZ} > 0 \rightarrow U_{PHZ}$ vorhanden) die Vierstellungsventile des Systems bzw. hier eines Kreises rechtzeitig ansprechen. Mit dem $U_{PH2}$ — Signal wird über das Und-Gatter 78 das Zeitglied 79 gesetzt. Wenn das Und-Gatter 78 nicht durch ein Signal am invertierten Eingang gesperrt wird, bevor die Zeitkonstante $T_V$ des Zeitglieds 79 endet, wird das Fehlersignal AL10 abgegeben. Das Und-Gatter 78 wird gesperrt, wenn die vier Ventilsteuersignale MV1-4 rechtzeitig auftreten und über die Und-Gatter 80a und b bistabile Stufen 80c und d setzen, deren Ausgangssignale dann über das Und-Gatter 80e das Und-Gatter 78 sperren.

Die bis jetzt geschilderten Abläufe geschehen im Verlauf der Bremsung. Wird bei stehendem Fahrzeug eine Überprüfung vorgenommen, so werden ja durch ein Befehlsmuster die Ventile betätigt. Es erscheint hier am Ausgang des Zeitglieds 77 (Stelle Ⓧ) das Fehlersignal wegen des fehlenden Bremslichtschaltersignals BL bzw. BLSÜ. Das Zeitglied 79 wird bei dieser Prüfung durch einen zusätzlichen Prüfbefehl P gesetzt. Wird hier ein Ventil im Prüfzyklus gewollt zeitlich verzögert angesteuert, erscheint das Fehlersignal AL 10.

In Fig. 8 ist eine Schaltung zur Überwachung des Druckwarnschalters 27 und des Füllstandswarnschalters 28 der Fig. 2 dargestellt. Die durch diese Schalter erzeugten Signale DWS und FLS werden der Schaltung zugeführt. Es wird ein Fehlersignal AL11 erzeugt, wenn der Druckwarnschalter länger als eine durch die Zeitkonstante TDWS eines Zeitglieds 81 gegebene Zeit anspricht. Dabei ist unterstellt, daß die Pumpe den Speicher 8 in dieser Zeit aufladen kann. Das gleiche Fehlersignal AL11 entsteht über das Oder-Gatter 82 auch, wenn das Signal FLS des Füllstandswarnschalters 28 erscheint.

Im Prüfzyklus wird mit einem Prüfsignal P ein bistabiles Glied gesetzt. Wird dieses nicht durch ein DWS-Signal rückgesetzt, weil trotz entsprechenden Druckmittelverbrauchs während des Testzyklus der Druckwarnschalter nicht anspricht, so bleibt das Fehlersignal AL11 nach Ende des Prüfzyklus erhalten. Im Prüfzyklus wird auch durch das Prüfsignal P die Zeitkonstante TTWS des Zeitglieds 81 verkürzt, sodaß das Fehlersignal AL11 auf jeden Fall erzeugt wird.

In der Schaltung der Fig. 9 wird die Funktion der Pumpe 7 überprüft. Ohne Fehler kann die pumpe den Speicher 8 in einer vorgegebenen Zeit so weit aufladen, daß der die Pumpe 7 einschaltende Schalter 26 öffnet. Das von diesem Schalter erzeugte Signal DS wird einem entsprechend bemessenen ($T_M$) Zeitglied go zugeführt. Es entsteht ein Fehlersignal AL12, wenn das Signal DS nicht vor Ablauf der Zeitkonstanten $T_M$ endet. Im Prüfzyklus (Signal P) wird wieder die Zeit $T_M$ verkürzt und außerdem ein bistabilen Glied 91 gesetzt, das durch das Signal DS rückgesetzt wird.

Die Fehlersignale Al1-12, die in den Schaltungen gemäß Fig. 5-9 bei Auftreten von Fehlern bzw. bei prüfung erzeugt werden, werden der Abschaltlogik gemäß Fig. 10 zugeführt und dort zusammengefaßt. Außerdem werden noch die Signale BLSÜ aus dem bistabilen Glied 72 (Bremslichtfolgesignal), $U_{PRZ}$ und $U_{PHZ}$ zugeführt.

Die Abschaltlogik unterscheidet je nach Fehler drei Fälle:

a) Fehler, die sofort zum Setzen des Fehlerspeichers und damit zum Abschalten der Anlage führen; das sind Fehler, die in der Nichtbremsphase erkannt werden und die Signale AL4 und AL7-9 erzeugen.

b) Fehler, die in der Bremsphase auftreten, dann auf Druckabbau schalten, um einen Druckausgleich zwischen den Drücken $P_{HZ}$ und $P_{RZ}$ zu erzielen, und damit einen Schlag gegen das Bremspedal zu vermeiden und dann abschalten. Das sind Fehler, die das ganze System beeinflussen können. In der Zeichnung sind es die Signale AL1-AL3, wenn diese Signale an wenigstens zwei Kanälen auftreten und die Signale AL5, AL6 und AL10-AL12.

c) Fehler, die in der Bremsphase auftreten und nur einen Kanal betreffen. Diese schalten in diesem Kanal auf Druckhalten und bei Bremsende das System ab. Dieses sind die Signale AL1-3, wenn sie nur von einem Kanal herrühren.

Die Signale AL4 und AL7-AL9 gelangen über Oder-Gatter 100, 101 und 103 sowie ein Und-Gatter 102 direkt zum Ausgang 104, setzen damit den Fehlerspeicher 42 der Fig. 4 und schalten damit das System ab.

Die Signale AL1-AL3 soweit sie an mindestens zwei Kanälen auftreten und die Signale AL5, AL6 und AL10-AL12 gelangen teilweise über Oder-Gatter 105, über Oder-Gatter 106 einmal zum Und-Gatter 107. Hierüber können sie erst nach Bremsende (BLSÜ aus 72 verschwindet) die Abschaltung bewirken. Sie gelangen aber auch zum Und-Gatter 108 und zur Klemme 109, über die sie einen Druckabbau auslösen (Signal $MV_{PAB}$). Solange der Druck am Radbremszylinder $P_R$ größer als der im Hauptbremszylinder $P_{HZ}$ ist, gibt der Vergleicher 110 kein Signal ab; damit ist das Und-Gatter 108 gesperrt bis Druckausgleich stattgefunden hat; diese Maßnahme soll einen Schlag über das Bremspedal vermeiden. Danach wird der Fehlerspeicher gesetzt.

Schließlich bewirken die Fehlersignale AL1-AL3, wenn sie nur an einem Kanal auftreten, über ein Oder-Gatter 111 und ein durchlässiges Und-Gatter 112 einmal, daß über das Und-Gatter 114 das Vierstellungsventil bis Bremsende (BLSÜ vorhanden) in die Stellung Druckhalten gebracht wird (über Klemme 115) und daß nach Bremsende über das Und-Gatter 113 die Abschaltung bewirkt wird.

Bis jetzt wurde über die Abschaltvorgänge gesprochen, die während des Fahrbetriebs auftraten. Zusätzlich kann in einem Prüfzyklus bei Stillstand überprüft werden, ob bei Ansteuerung des Systems mit entsprechend bemessenen Befehlen tatsächlich die Fehlersignale auftreten. In diesem Prüfzyklus wird mittels eines P-Signals das Und-Gatter 102 gesperrt, um nicht durch das gewollte Auftreten von Fehlersignalen den Fehlerspeicher zu setzen. Jedoch wird man nun vergleichen, ob in den zwei Überwachungszweigen bei Ansteuerung gleichzeitig Fehlersignale entstehen. Ist dies der Fall, so gibt ein Gatter 116, in dem dieser Vergleich durchgeführt wird kein Abschaltsignal ab; entsteht nur eines der Fehlersignale, so wird ein Abschaltsignal abgegeben.

## Patentansprüche

1. Überwachungsverfahren für ein Bremssystem enthaltend

1) einen vom Bremspedal betätigten Hauptbremszylinder

2) eine eine Pumpe enthaltende, weitere Druckquelle,

3) eine durch elektrische Signale steuerbare Ventileinrichtung mit wenigstens drei Schaltstellungen, von denen

a) die erste wenigstens einen Radbremszylinder mit einem Hauptbremszylinder verbindet,

b) die zweite den wenigstens einen Radbremszylinder mit der weiteren Druckquelle verbindet und

c) die dritte den wenigstens einen Radbremszylinder mit einer Auslaßleitung verbindet,

4) zwei Druckfühler zur Erzeugung von zwei Signalen, von denen das eine den im Hauptbremszylinder erzeugten Druck und das andere den im Radbremszylinder herrschenden Druck beinhaltet und

5) eine Steuerschaltung für die Ventileinrichtung, der die Signale der zwei Druckfühler zugeführt werden und die normalerweise die Ventileinrichtung zur Erzeugung eines von dem durch den Hauptbremszylinder erzeugten Druck abhängigen Drucks den wenigstens einen Radbremszylinder abwechselnd mit der weiteren Druckquelle und der Auslaßleitung verbindet, und bei Auftreten eines mittels der Druckfühler erkannten Fehlers bei der Druckerzeugung ein Warn- und/oder Abschaltsignal (AL) erzeugt.

dadurch gekennzeichnet, daß mit der Ansteuerung der zweiten oder dritten Schaltstellung der Ventileinrichtung beginnend jeweils überprüft wird, ob die Änderung $\triangle P$ des Drucks an der Radbremse $P_R$ in einer vorgegebenen Überwachungszeit ($T_{Ab}$, $T_{Auf}$) einen vorgegebenen Wert (R) überschreitet, daß die Überwachungszeiten ($T_{Ab}$, $T_{Auf}$) in Abhängigkeit vom Radbremsdruck ($P_R$) verändert werden und daß das Warn- und/oder Abschaltsignal (AL) erzeugt wird, wenn nach Ablauf der Überwachungszeit ($T_{Ab}$, $T_{Auf}$) diese Änderung nicht aufgetreten ist.

2. Verfahren nach Anspruch 1, bei dem die Ventileinrichtung des Bremssystems noch eine vierte Schaltstellung zum Halten des Radbremsdrucks aufweist, dadurch gekennzeichnet, daß beginnend mit der Ansteuerung der vierten Schaltstellung überprüft wird, ob in einer vorgegebenen Überwachungszeit ($T_H$) eine vorgegebene Druckänderung an der Radbremse erfolgt und daß ein Warn- und/oder Abschaltsignal erzeugt wird, wenn in der Überwachungszeit die Druckänderung erfolgt.

3. Verfahren nach Anspruch 1 oder 2, dadurch gekennzeichnet, daß zusätzlich überwacht wird, ob bei Nichtbetätigung der Bremse (z.B. Druck des Hauptbremszylinders 0) eine Druckdifferenz $\triangle P$ größer als ein kleiner Wert zwischen dem Ein-und Ausgang der Ventilanordnung anliegt und daß bei Feststellung dieses Zustands ein Warn- und/oder Schaltsignal erzeugt wird.

4. Verfahren nach einem der Ansprüche 1 bis 3, dadurch gekennzeichnet, daß überprüft wird, ob bei ABS-Betrieb der Radbremsdruck größer als der um einen vorgegebenen Verstärkungsfaktor vergrößerte Hauptbremszylinderdruck ist und daß bei Feststellung dieses Zustands das Warn- und/oder Schaltsignal erzeugt wird.

5. Verfahren nach einem der Ansprüche 1 bis 4, dadurch gekennzeichnet, daß geprüft wird, ob außerhalb des ABS-Betriebs sich der Druck am Radbremszylinder dem vom Hauptbremszylinder vorgegebenen Druck in einer vorgegebenen Zeit ($T_6$) angenähert hat, und daß bei Ausbleiben dieser Annäherung in dieser Zeit ($T_6$) das Warn- und/oder Schaltsignal erzeugt wird.

6. Verfahren nach einem der Ansprüche 1 bis 5, dadurch gekennzeichnet, daß überprüft wird, ob bei einem Hauptbremszylinderdruck größer 0 der Bremslichtschalter angesprochen hat und daß bei Nichterfüllung dieser Bedingung das Warn- und/oder Schaltsignal erzeugt wird.

7. Verfahren nach einem der Ansprüche 1 bis 6, dadurch gekennzeichnet, daß überprüft wird, ob bei Ansteuerung der Ventileinrichtung (oder auch wenigstens einer der Ventileinrichtungen für die anderen Bremsen) der Bremslichtschalter angesprochen hat und daß bei Nichterfüllung dieser Bedingung das Warn- und/oder Schaltsignal erzeugt wird.

8. Verfahren nach Anspruch 7, dadurch gekennzeichnet, daß bei ABS-Betrieb, das Warn- und/oder Schaltsignal unterdrückt wird.

9. Verfahren nach einem der Ansprüche 1 bis 8, dadurch gekennzeichnet, daß überprüft wird, ob bei Bremsbetätigung ($P_{Hz}$ > 0) die Ventilanordnung (und gegebenenfalls auch die für die anderen Bremsen) innerhalb einer vorgegebenen kleinen Zeitspanne ($T_v$) ansprechen und daß bei Nichterfüllung dieser Bedingung das Warn- und/oder Schaltsignal erzeugt wird.

10. Verfahren nach einem der Ansprüche 1 bis 9, dadurch gekennzeichnet, daß die Dauer des Ansprechens eines der zweiten Druckquelle zugeordneten Druckwarnschalters überwacht wird und daß bei Andauern des Ansprechens über eine vorgegebene Zeit hinaus das Warn- und/oder Schaltsignal erzeugt wird.

11. Verfahren nach einem der Ansprüche 1 bis 10, dadurch gekennzeichnet, daß bei Absinken des Flüssigkeitsstandes im Reservoir für die Pumpe der zweiten Druckquelle das Warn- und/oder Schaltsignal erzeugt wird.

12. Verfahren nach einem der Ansprüche 1 bis 11, dadurch gekennzeichnet, daß die Einschaltdauer des Pumpenmotors der zweiten Druckquelle überwacht wird und daß bei Andauern der Einschaltdauer über eine vorgegebene Zeit hinaus das Warn- und/oder Schaltsignal erzeugt wird.

13. Verfahren nach einem der Ansprüche 3, 6 und 7, dadurch gekennzeichnet, daß das Warn- und/oder Schaltsignal direkt zur Umschaltung des Bremssystems auf den Zustand "direkte Bremsbetätigung durch den Hauptbremszylinder" (1. Schaltstellung der Ventileinrichtung) und Sperrung einer weiteren Ansteuerung benutzt wird.

14. Verfahren nach einem der Ansprüche 4, 5, 9 und 12, dadurch gekennzeichnet, daß das Auftreten des Warn- und/oder Schaltsignals zuerst die Ventilanordnung in die dritte Schaltstellung und danach auf die erste Schaltstellung einstellt und die weitere Ansteuerung der Ventileinrichtung sperrt.

15. Verfahren nach Anspruch 14, dadurch gekennzeichnet, daß die Anpassung der Drücke vor und hinter der Ventileinrichtung in der dritten Schaltstellung überwacht wird und bei Gleichheit oder am Bremsende auf die erste Schaltstellung weitergeschaltet und die weitere Ansteuerung gesperrt wird.

16. Verfahren nach Anspruch 14 oder 15, dadurch gekennzeichnet, daß bei einem höheren Druck im Hauptbremszylinder als im Radbremszylinder sofort in die erste Schaltstellung gesteuert und die Sperrung einer weiteren Ansteuerung vorgenommen wird.

17. Verfahren nach einem der Ansprüche 1 oder 2, dadurch gekennzeichnet, daß bei Auftreten des Warn- und/oder Schaltsignals und weiterer Bremsbetätigung die Ventileinrichtung in die vierte Schaltstellung gesteuert wird und bei Bremsende in die erste Schaltstellung gesteuert und die weitere Ansteuerung gesperrt wird.

18. Verfahren nach einem der Ansprüche 1 oder 2, dadurch gekennzeichnet, daß bei Auftreten des Warn- und/oder Schaltsignals in wenigstens zwei Ansteuerkanälen die Ventileinrichtungen bei $P_{RZ} > P_{HZ}$ in die dritte Schaltstellung und nach Druckangleichung oder bei Bremsende in die erste Schaltstellung gebracht und die weitere Ansteuerung gesperrt wird.

19. Verfahren nach einem der Ansprüche 1 oder 2, dadurch gekennzeichnet, daß bei Auftreten des Warn- und/oder Schaltsignals in wenigstens zwei Ansteuerkanälen die Ventileinrichtungen bei $P_{HZ} \geq P_{RZ}$ die Ventileinrichtung sofort in die erste Schaltstellung gebracht und eine Sperrung der Ansteuerung vorgenommen wird.

20. Verfahren nach einem der Ansprüche 1 bis 19, dadurch gekennzeichnet, daß zeitweise in das Bremssystem solche Prüfsignale eingekoppelt werden, daß die einzelnen Warn- und/oder Schaltsignale in wenigstens zwei redundanten Prüfkanälen entstehen, daß verglichen wird, ob die sich entsprechenden Warn- und/ oder Schaltsignale in den zwei Kanälen gleichzeitig auftreten und daß bei nicht gleichzeitigem Auftreten auf die erste Schaltstellung gesteuert und eine weitere Ansteuerung verhindert wird.

21. Verfahren nach Anspruch 20, dadurch gekennzeichnet, daß dabei Zeitglieder in ihrer Zeitdauer verkürzt werden.

22. Verfahren nach Anspruch 20, dadurch gekennzeichnet, daß der die Pumpe einschaltende Schalter oder der Druckwarnschalter dadurch überprüft werden, daß mit dem einen Druckverbrauch hervorrufenden Prüfsignal je ein Zeitglied gesetzt wird, das bei Ansprechen der Schalter rückgesetzt wird und daß bei Überschreiten von vorgegebenen Zeiträumen zwischen den Setz- und Rücksetzsignalen ein Warn- und/oder Schaltsignal erzeugt wird.

## Revendications

1. Procédé de surveillance pour un système de freinage comprenant:

1) un cylindre principal de freinage actionné par la pédale de freinage,

2) une autre source de pression comprenant une pompe,

3) un dispositif de vanne électromagnétique susceptible d'être commandé par des signaux électriques et comportant au moins trois positions de commutation, dont:

a) la première relie au moins un cylindre de frein de roue à un cylindre principal de freinage,

b) la seconde relie ce cylindre ou ces cylindres de frein de roue à l'autre source de pression,

c) la troisième relie ce cylindre ou ces cylindres de frein de roue à une canalisation d'évacuation,

4) Deux capteurs permettant d'obtenir deux signaux, dont l'un correspond à la pression créée dans le cylindre de freinage, tandis que l'autre correspond à la pression régnant dans le cylindre de frein de roue,

5) un circuit de commande pour le dispositif de vanne électromagnétique, circuit auquel sont appliqués les signaux des deux capteurs de pression et qui relie normalement le cylindre ou les cylindres de frein de roue alternativement à l'autre source de pression et à la canalisation d'évacuation, pour obtenir une pression dépendant de la pression créée par le cylindre principal de freinage, et ce circuit, lorsqu'il apparait, lors de la création de la pression, un défaut détecté par le capteur de pression, émet un signal d'avertissement et/ou de coupure (AL),

procédé caractérisé en ce que, avec la commande de la seconde ou de la troisième position de commutation du dispositif de vanne électromagnétique, il est respectivement vérifié au début si la modification $\triangle P$ de la pression sur le frein de roue ($P_R$) dépasse, dans un temps de surveillance prédéfini ($T_{Ab}$, $T_{Auf}$) une valeur prédéfinie (R), les temps de surveillance ($T_{Ab}$, $T_{Auf}$) étant modifiés en fonction de la pression ($P_R$) du frein de roue, et le signal d'avertissement et/ou de coupure (AL) étant émis lorsque, après l'écoulement du temps de surveillance ($T_{Ab}$, $T_{Auf}$), cette modification ne s'est pas produite.

2. Procédé selon la revendication 1, dans lequel le dispositif de vanne électromagnétique du système de freinage comporte en outre une quatrième position de commutation pour maintenir la pression de frein de roue, procédé caractérisé en ce qu'il est vérifié au début avec la commande de la quatrième position de commutation, si dans un temps de surveillance prédéfini ($T_H$) une modification de pression prédéfinie a lieu sur le frein de roue, et un signal d'avertissement et/ou de coupure est émis lorsque la modification de pression a lieu dans ce temps de surveillance.

3. Procédé selon la revendication 1 ou la revendication 2, caractérisé en ce qu'il est en outre vérifié si, lorsque le frein n'est pas actionné (par exemple pression nulle du cylindre principal de freinage), une différence de pression $\triangle P$ supérieure à une valeur faible s'applique entre l'entrée et la sortie du dispositif de vanne électromagnétique, et si cette situation est constatée, un signal d'avertissement et/ou de commutation est émis.

4. Procédé selon une des revendications 1 à 3, caractérisé en ce qu'il est vérifié si, dans le cas du fonctionnement en ABS, la pression de frein de roue est supérieure à la pression du cylindre principal de freinage, augmentée d'un facteur d'amplification prédéfini, et si cette situation est constatée, le signal d'avertissement et/ou de commutation est émis.

5. Procédé selon une des revendications 1 à 4, caractérisé en ce qu'il est vérifié si, en dehors du fonctionnement en ABS, la pression sur le cylindre de frein de roue s'est rapprochée en un temps prédéfini ($T_6$) de la pression prédéfinie par le cylindre principal de freinage, et si ce rapprochement n'a pas eu lieu dans ce temps ($T_6$), le signal d'avertissement et/ou de commutation est émis.

6. Procédé selon une des revendications 1 à 5, caractérisé en ce qu'il est vérifié si, pour une pression du cylindre principal de freinage supérieure à zéro, le contacteur de stop a réagi, et si cette condition n'est pas remplie le signal d'avertissement et/ou de commutation est émis.

7. Procédé selon une des revendications 1 à 6, caractérisé en ce qu'il est vérifié si, lors de la commande du dispositif de vanne électromagnétique (ou également d'au moins un des dispositifs de vanne électromagnétique pour les autres freins), le contacteur de stop a réagi, et si cette condition n'est pas remplie, le signal d'avertissement et/ou de commutation est émis.

8. Procédé selon la revendication 7, caractérisé en ce que, dans le cas de fonctionnement en ABS, le signal d'avertissement et/ou de commutation est supprimé.

9. Procédé selon une des revendications 1 à 8, caractérisé en ce qu'il est vérifié si, lors de l'actionnement des freins ($P_{HZ} > 0$) le dispositif de vanne électromagnétique (et éventuellement aussi ceux prévus pour les autres freins) réagissent dans un laps de temps réduit ($T_v$) prédéfini, et si cette condition n'est pas remplie, le signal d'avertissement et/ou de commutation est émis.

10. Procédé selon une des revendications 1 à 9, caractérisé en ce que la durée de réaction d'un contacteur de signalisation de la pression associé à la deuxième source de pression est surveillée et si cette réaction persiste au-delà d'un temps prédéfini, le signal d'avertissement et/ou de commutation est émis.

11. Procédé selon une des revendications 1 à 10, caractérisé en ce qu'en cas d'abaissement du niveau du liquide dans le réservoir pour la pompe de la deuxième source de pression, le signal d'avertissement et/ou de commutation est émis.

12. Procédé selon une des revendications 1 à 11, caractérisé en ce que la durée d'enclenchement du moteur de la pompe de la deuxième source de pression est surveillée, et si cette durée d'enclenchement persiste au-delà d'un temps prédéfini, le signal d'avertissement et/ou de commutation est émis.

13. Procédé selon une des revendications 3, 6 et 7, caractérisé en ce que le signal d'avertissement et/ou de commutation est directement utilisé pour commuter le système de freinage sur l'état de fonctionnement "actionnement direct des freins par le cylindre principal de freinage" (position de commutation 1 du dispositif de vanne électromagnétique), et pour bloquer une autre commande.

14. Procédé selon une des revendications 4, 5, 9 et 12, caractérisé en ce que l'intervention du signal d'avertissement et/ou de commutation règle tout d'abord le dispositif de vanne électromagnétique dans la troisième position de commutation et ensuite sur la première position de commutation et bloque tout autre commande du dispositif de vanne électromagnétique.

15. Procédé selon la revendication 14, caractérisé en ce que l'adaptation des pressions devant et derrière le dispositif de vanne électromagnétique dans la troisième position de commutation est surveillée, et en cas d'égalité ou à la fin du freinage, la commutation se poursuit sur la première position de commutation et l'autre commande est bloquée.

16. Procédé selon la revendication 14 ou la revendication 15, caractérisé en ce que, dans le cas d'une pression plus élevée dans le cylindre principal de freinage que dans le cylindre de frein de roue, il y a immédiatement commande dans la première position de commutation et le blocage d'une autre commande est effectué.

17. Procédé selon une des revendications 1 ou 2, caractérisé en ce que, lorsqu' apparait le signal d'avertissement et/ou de commutation et que le frein continue à être actionné, le dispositif de vanne électromagnétique est commandé dans la quatrième position de commutation, et à la fin du freinage, il est commandé dans la première position de commutation tandis que l'autre commande est bloquée.

18. Procédé selon une des revendications 1 ou 2, caractérisé en ce que, lorsque le signal d'avertissement et/ou de commutation apparait dans au moins deux canaux de commande, les dispositifs de vanne électromagnétique sont amenés dans la troisième position de commutation lorsque $P_{RZ} > P_{HZ}$, et après l'égalisation des pressions ou à la fin du freinage, ils sont amenés dans la première position de commutation et l'autre commande est bloquée.

19. Procédé selon une des revendications 1 ou 2, caractérisé en ce que, lorsque le signal d'avertissement et/ou de commutation apparait dans au moins deux canaux de commande, les dispositifs de vanne électromagnétique sont immédiatement amenés dans la première position de commutation lorsque $P_{HZ} \geq P_{RZ}$ et un blocage de la commande est effectué.

20. Procédé selon une des revendications 1 à 19, caractérisé en ce que des signaux de contrôle sont périodiquement introduits dans le système de freinage, signaux grâce auxquels les différents signaux d'avertissement et/ou de commutation apparaissent dans au moins deux canaux de contrôle redondants, et il est alors vérifié si les signaux d'avertissement et/ou de commutation correspondants apparaissent simultanément dans les deux canaux, et si ce n'est pas le cas, il y a commande sur la première position de commutation et tout autre commande est empêchée.

21. Procédé selon la revendication 20, caractérisé en ce que dans ce cas, les durées de temporisation des organes de temporisation sont réduites.

22. Procédé selon la revendication 20, caractérisé en ce que le contacteur enclenchant la pompe ou le contacteur de signalisation de la pression est vérifié en ce qu'un organe de temporisation est positionné par le signal de contrôle provoquant une consommation de pression, cet organe étant remis à l'état initial lorsque le contacteur réagit, et lorsque des laps de temps prédéfinis entre les signaux de positionnement et de remise à l'état initial sont dépassés, un signal d'avertissement et/ou de commutation est émis.

**Claims**

1. Monitoring method for a brake system containing
   1) a main brake cylinder activated by the brake pedal
   2) a further pressure source containing a pump,
   3) a valve device which can be controlled by electrical signals and having at least three switching positions, of which
      a) the first switching position connects at least one wheel brake cylinder to a main brake cylinder,
      b) the second switching position connects the at least one wheel brake cylinder to the further pressure source and
      c) the third switching position connects the at least one wheel brake cylinder to an outlet line,
   4) two pressure sensors for generating two signals, of which the one contains the pressure generated in the main brake cylinder and the other the pressure prevailing in the wheel brake cylinder, and
   5) a control circuit for the valve arrangement, to which the signals of the two pressure sensors are supplied and which normally connects the valve device for generating a pressure which is dependent on the pressure generated by the main brake cylinder (lacuna) the at least one wheel brake cylinder alternately to the further pressure source and the outlet line and, on the occurrence of a fault detected by means of the pressure sensors, generates a warning and/or switch-off signal (AL) during the generation of pressure, characterized in that, starting with the actuation of the second or third switching position of the valve device, it is tested in each case whether the change $\triangle P$ of the pressure at the wheel brake $P_R$ exceeds a predetermined value (R) in a predetermined monitoring time $(T_{Ab}, T_{Auf})$, in that the monitoring times $(T_{Ab}, T_{Auf})$ are changed as a function of the wheel brake pressure $(P_R)$ and in that the warning and/or switch-off signal (AL) is generated if this change has not occurred after the monitoring time $(T_{Ab}, T_{Auf})$ has expired.

2. Method according to Claim 1, in which the valve device of the brake system has a further fourth switching position for holding the wheel brake pressure, characterized in that, starting with the actuation of the fourth switching position, it is tested whether a predetermined pressure change occurs at the wheel brake in a predetermined monitoring time $(T_H)$ and in that a warning and/or switch-off signal is generated if the pressure change occurs in the monitoring time.

3. Method according to Claim 1 or 2, characterized in that it is additionally monitored whether, on non-activation of the brake (e.g. pressure of the main brake cylinder 0), a pressure difference $\triangle P$ is present which is greater than a small value between the input and output of the valve arrangement and in that, on detection of this state, a warning and/or switching signal is generated.

4. Method according to one of Claims 1 to 3, characterized in that it is tested whether the wheel pressure in ABS mode is greater than the main brake cylinder pressure increased by a predetermined amplification factor and in that, on detection of this state, the warning and/or switching signal is generated.

5. Method according to one of Claims 1 to 4, characterized in that it is tested whether, outside ABS mode, the pressure at the wheel brake cylinder has approached in a predetermined time $(T_6)$ the pressure predetermined by the main brake cylinder, and in that, if this approach does not occur in this time $(T_6)$, the warning and/or switching signal is generated.

6. Method according to one of Claims 1 to 5, characterized in that it is tested whether in the case of a main brake cylinder pressure greater than 0 the brake light switch has responded, and in that, on nonfulfilment of this condition, the warning and/or switching signal is generated.

7. Method according to one of Claims 1 to 6, characterized in that it is tested whether the brake light switch has responded on actuation of the valve device (or also at least one of the valve devices for the other brakes), and in that, on nonfulfilment of this condition, the warning and/or switching signal is generated.

8. Method according to Claim 7, characterized in that, in ABS mode, the warning and/or switching signal is suppressed.

9. Method according to one of Claims 1 to 8, characterized in that it is tested whether, on activation of the brakes $(P_{Hz} > 0)$, the valve arrangement (and also that for other brakes if appropriate) responds within a predetermined short period of time $(T_v)$ and in that, on nonfulfilment of this condition, the warning and/or switching signal is generated.

10. Method according to one of Claims 1 to 9, characterized in that the duration of the response of a pressure warning switch associated with the second pressure source is monitored and in that, on continuation of the response beyond a predetermined time, the warning and/or switching signal is generated.

11. Method according to one of Claims 1 to 10, characterized in that if the liquid level in the reservoir for the pump of the second pressure source falls, the warning and/or switching signal is generated.

12. Method according to one of Claims 1 to 11, characterized in that the ON time of the pump motor of the second pressure source is monitored and in that, on continuation of the ON time beyond a predetermined time, the warning and/or switching signal is generated.

13. Method according to one of Claims 3, 6 and 7, characterized in that the warning and/or switching signal characterized in that the warning and/or switching signal is used directly to switch over the brake system to the state "direct brake activation by the main brake cylinder" (1st switching position of the valve device) and to block a further actuation.

14. Method according to one of Claims 4, 5, 9 and 12, characterized in that the occurrence of the warning and/or switching signal first sets the valve arrangement to the third switching position and then to the first switching position and blocks the further actuation of the valve device.

15. Method according to Claim 14, characterized in that the matching of the pressures in front of and behind the valve device is monitored in the third switching position and in the case of equality or at the end of braking the first switching position is further switched and the further actuation is blocked.

16. Method according to Claim 14 or 15, characterized in that, in the event of a higher pressure in the main brake cylinder than in the wheel brake cylinder, the first switching position is immediately set and the blocking of a further actuation is performed.

17. Method according to one of Claims 1 or 2, characterized in that, on occurrence of the warning and/or switching signal and further brake activation, the valve device is set to the fourth switching position and, at the end of braking, the first switching position is set and the further actuation is blocked.

18. Method according to one of Claims 1 or 2, characterized in that, on occurrence of the warning and/or switching signal in at least two actuation channels, the valve devices where $P_{RZ} > P_{HZ}$ are placed in the third switching position and after pressure equalization or at the end of braking they are placed in the first switching position and the further actuation is blocked.

19. Method according to one of Claims 1 or 2, characterized in that, on occurrence of the warning and/or switching signal in at least two actuation channels, the valve devices where $P_{HZ} \geq P_{RZ}$ the valve device (sic) is blocking of the actuation is performed.

20. Device according to one of Claims 1 to 19, characterized in that, at intervals, test signals are input into the brake system such that the individual warning and/or switching signals arise in at least two redundant test channels, in that it is compared whether the corresponding warning and/or switching signals occur at the same time in the two channels and in that, on non-simultaneous occurrence the first switching position is set and a further actuation is prevented.

21. Method according to Claim 20, characterized in that in this case the duration of the timing elements is shortened.

22. Method according to Claim 20, characterized in that the switch switching on the pump or the pressure warning switch are tested in that in each case one timing element is set with the test signal which brings about a pressure consumption, said timing element being reset when the switch responds and in that, when predetermined time periods between the setting and resetting signals are exceeded, a warning and/or switching signal is generated.

EP 0 157 309 B1

FIG.1

1

FIG.2

FIG. 3

FIG.4

FIG. 5

EP 0 157 309 B1

$U_{\Delta P} > X$

$U_{PHZ} > 0$

60

⊗——○AL4

$U_{\Delta P} = "\text{Neg.}" \hat{=} P_{RAD} > N \cdot P_{HZ}$

ABS

⊗——○AL5

$T_6$

61

⊗——○AL6

## FIG.6

P

DWS

$T_{DWS}$  81

82

⊗——○AL11

P

FLS

R  Q
S

83

## FIG.8

P

DS

$T_M$

90

⊗——○AL12

P

R  Q
S

91

## FIG.9

6

FIG.7

7

FIG.10

EP 0 157 309 B1